(19)

Europäisches
Patentamt
European
Patent Office
Office européen
des brevets

(11) **EP 2 237 494 A1**

(12) **EUROPEAN PATENT APPLICATION**

(43) Date of publication:
**06.10.2010 Bulletin 2010/40**

(51) Int Cl.:
***H04L 12/56*** (2006.01)

(21) Application number: **09250987.6**

(22) Date of filing: **31.03.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **BRITISH TELECOMMUNICATIONS public limited company**
**London**
**EC1A 7AJ (GB)**

(72) Inventor: **The designation of the inventor has not yet been filed**

(74) Representative: **Nash, Roger William et al**
**BT Group Legal**
**Intellectual Property Department**
**PP C5A, BT Centre**
**81 Newgate Street**
**London**
**EC1A 7AJ (GB)**

(54) **Routing traffic in a communications network**

(57)      A method and apparatus for operating a communications network in order to select a path P in said network from an ingress node S to an egress node D for an application generating traffic having defined Quality of Service metrics U(Xu,Yu,Zu).

From a number of available paths offering defined QoS metrics the network is operated to select the path that has the shortest distance d from a point defined by the QoS metrics for said path to a straight Quality of Service requirement line <u>OU</u> for said application, wherein said line is calculated in space defined by axes representing said Quality of Service metrics and extending through an origin (0,0,0) and the point defined by said Quality of Service metrics U(Xu,Yu,Zu) for said traffic generated by the application.

The method and apparatus can be deployed into the present Border Gateway Protocol and assign a "best" path from a number of dominant paths in a BGP extension with QoS enhancement to support multiple classes of services. It could also be used in other inter-domain and intra-domain routing protocols.

Figure 2

EP 2 237 494 A1

**Description**

The present invention relates to a method of routing traffic through a communications network, and to network routers or switches which are arranged to perform the method when interconnected to form a communications network.

Until recently, the predominant routing protocols used in communications networks selected a route for a flow through a communications network independently of the quality-of-service (QoS) required from the communications network for that flow. The introduction of Multi-Protocol Label Switched networks now provides an exception in which different classes of traffic are assigned to different routes on entry to the Multi-Protocol Label Switched network.

A further exception now being proposed is an enhancement to the external Border Gateway Protocol (BGP). The external Border Gateway Protocol is the dominant routing protocol used in inter-domain routing in the Internet. As with other routing protocols, routers operating in accordance with the Border Gateway Protocol periodically send advertisements which indicate the destinations which can be reached from that router, however, unlike routers operating in accordance with other routing protocols they do not advertise some performance parameter of their paths to the destination, but just the route used to get to that destination.

The enhancement to the Border Gateway Protocol is put forward by Lofti Benmohamed and others in an paper entitled "Inter-Domain Routing with Multi-Dimensional QoS Requirements", IEEE Milcom 2005. That paper proposes that routers participating in the enhanced Border Gateway Protocol should send advertisements indicating a plurality of paths to each reachable destination and provide a multiple-dimension QoS metric for each path. The dimensions included in each QoS metric might include well known metrics such as bandwidth, packet delay and delay variation, packet loss, as well as other metrics such as path security, path availability, time to reconfigure etc.

US Patent application 2008/0123533 discloses a network in which a node in a network builds up a Link State Database and Traffic Engineering Database using known techniques. To find a route to a destination from the node, a path computation process running on the node, knowing the cost and bandwidth of each link in the network, compares the candidate paths taking into account the minimum bandwidth along the path and the cost of the path. In order to reduce the computation necessary to make this comparison, only Pareto-optimal paths are considered, that is to say, paths for which no other path is better in terms of both cost and bandwidth. More generally, Pareto-Optimal paths are these for which no other path is better in terms of all path characteristics that are being used to assess the quality of the path.

The IEEE Milcom paper mentioned above reduces the amount of link state messaging and processing within the BGP routing protocol by only having routes advertise Pareto-optimal paths to each destination.

Whilst the IEEE Milcom 2005 paper mentions the selection of a route from amongst candidate Pareto-optimal paths, it does not detail how that selection might be achieved. A later paper by Lofti Benmohamed and others, entitled "QoS Enhancements to BGP in Support of Multiple Classes of Service" at MILCOM 2006 proposes a method of selecting a route from amongst candidate Pareto-optimal paths, that method simply choosing the path which most exceeds the minimally-acceptable level of QoS metrics for whatever application is generating the traffic.

The present inventor has realised that this method can be improved upon to provide a more efficient allocation of the resources of a communications network between different applications (e.g. telephony, television, stock market price data or file transfers).

According to a first aspect of the invention, there is provided a method of operating a communications network to select a path P from an ingress node S to an egress node D in said network for traffic generated by an application having defined Quality of Service metrics U(Xu,Yu,Zu) comprising the steps of

gathering a plurality of Quality of Service metrics for each of a plurality of links in the network;

determining a plurality of paths P over said links leading from said ingress node to said egress node and calculating the Quality of service metrics P (Xp,Yp,Zp) offered by each path;

calculating a measure indicative of the distance d from the point defined by the Quality of Service metrics offered by at least a selection of the available paths P (Xp,Yp,Zp) and a straight Quality of Service requirement line OU extending through the origin (0,0,0) and

the point defined by said Quality of Service metrics (Xu,Yu,Zu) in a space defined by axes representing said Quality of Service metrics; and

selecting the path P having the shortest distance d to the QoS requirement line OU.

This has the advantage that a more cost effective scheme for selecting a path in a network is obtained since by using this method a path that only just meets the QoS targets for a certain application is selected instead for a path that substantially exceed at least one of the targets.

Preferably, the distance d to the QoS requirement line is determined only for Pareto Optimal paths.

This has the advantage that the calculations are only performed for the most viable paths, which saves resources.

According to a second aspect of the invention there is provided a router for routing an application having defined Quality of Service metrics U(Xu,Yu,Zu) through a communications network from a ingress node to an egress node, comprising means for gathering a plurality of Quality of Service metrics for each link in the network; means for determining a plurality of paths P along said links from the ingress node to the egress node;

means for determining the Quality of Service metrics for each path P (Xp,Yp,Yz);

means for calculating a measure indicative of the distance d from the point defined by the Quality of Service metrics offered by at least a selection of the available paths P (Xp,Yp,Zp) and a straight Quality of Service requirement line <u>OU</u> extending through the origin (0,0,0) and the point defined by said Quality of Service metrics (Xu,Yu,Zu) in a space defined by axes representing said Quality of Service metrics; and

means for selecting the path P having the shortest distance d to the Quality of Service requirement line <u>OU</u> and means for routing the application through the network along this path.

A method for operating a communications network in accordance with a first embodiment as well as router for performing said method will now be described by way of example only with reference to the accompanying drawings in which:

Figure 1 is a graph showing a Pareto curve or front for non-dominated paths A -D in a network wherein the paths are subject to the QoS constraints f1 and f2.

Figure 2 shows the same graph as in figure 1 wherein the QoS constraints and a QoS requirement line <u>OU</u> for an application U is also plotted.

Figure 3 shows a network having an ingress node S, an egress node D and intermediate nodes N1 -N3 and where the QoS metrics for each link in the network is shown.

Figure 4 shows a graph showing the QoS constraints cost and bandwidth restrictedness for the paths in the network of figure 3 as well as the QoS requirements, or metrics, and the QoS requirement line <u>OU</u> for an application to be sent through said network.

A novel differentiation scheme is created to rank the dominant solutions based on Pareto optimal Multi-Criteria Optimisation method. The optimal solution is calculated on the Quality-of-Service (QoS) requirement for specific application traffic. It helps differentiate the dominant solutions on the Pareto front which are virtually equal to each other and produce an "optimal" solution.

The vast majority of optimisation problems are defined via a scalar objective function that is used to evaluate solution quality; the objective function imposes an unambiguous and total ordering on the set of potential solutions, and the task is "simply" to search for an optimum. However, numerous real applications require finding solutions that "simultaneously" optimise two or more distinct and conflicting criteria of preference.

For example, there are at least four criteria for QoS routing: bandwidth, delay, packet loss and jitter. These objectives contradict each other and have trade-off relations. Conventional approaches that optimise a single objective have difficulty in resolving such problems. These are known as multi-objective optimisation problems which present a number of challenges that do not arise in scalar optimisation. For example, in most cases, there is not one single solution that is an optimum for all problem objectives. Instead, there are a number of solutions that represent different tradeoffs among the objectives. The major multi-criteria optimisation (MO) method is as stated the Pareto-optimal method. The Pareto-based method uses the idea of non-dominated solutions (or dominant solutions) to express possible solutions, which satisfy both available trade-offs and potential different emphasis that might be applied.

The concept of Pareto optimality will now be described. We state that a vector $x$ is partially less than $y$, symbolically $x$ < p $y$, when the following conditions hold:

$$x < \text{p}\ y\ \Leftrightarrow\ (\forall i)\ (\ x_i = y_i\ ) \wedge (\exists i)\ (\ x_i < y_i\ )$$

Under these circumstances we say that vector **x** *dominates* vector **y.** If a vector is not dominated by any other, we define it as *non-dominated.* In MO, all the non-dominated individuals represent various possible solutions.

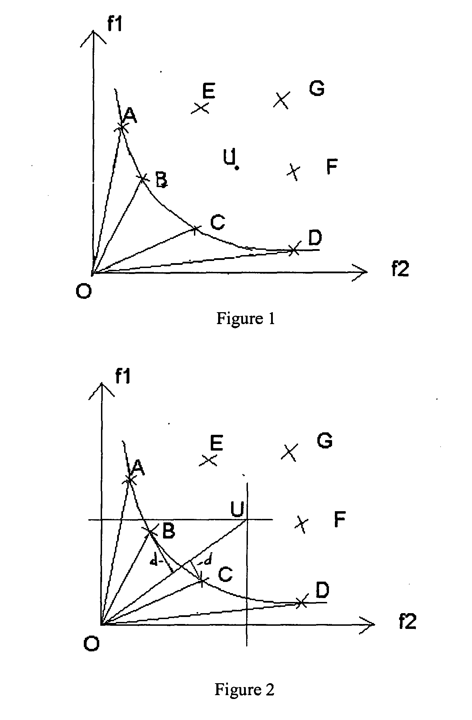

Using Figure 1 as an example, when we try to minimise objectives f1 and f2, such as delay and packet loss, A, B, C, D are all dominant (or non dominated) paths, E, F, G are dominated paths. The application's QoS requirement, U (Xu, Yu) for two objectives f1 and f2 are given, i.e. if the objectives are delay and packet loss the delay f1 should not exceed Xu and the packet loss f2 should not exceed Yu.

In case the objective f is a desirable objective such as bandwidth the objective should not be less than Xu or Yu.

It is clear from this figure that the Border Gateway Protocol (BGP) should not exchange multi-path routing information with its peers using the paths E, G, and F since paths A, B, C and D are all better than them.

Then the problem is how BGP can differentiate the dominant paths A, B, C and D and pick up the best path among these for routing the packets from the source to destination.

Referring now to Figure 2, given the application's QoS requirement, or metrics, U (Xu, Yu) for the two objectives f1 delay and f2 packet loss, a straight QoS requirement line <u>OU</u> for the application can be visualised from the point (0,0) to U(Xu, Yu). Based on the geometric formula for a line, the visualised line <u>OU</u> can be represented with the following formula:

$$\frac{Y - Yu}{X - Xu} = \frac{Yo - Yu}{Xo - Xu} \qquad [1]$$

Since Xo = 0 and Yo = 0, the OU line can be represented as

$$Yu * X - Xu * Y = 0 \qquad [2]$$

The dominant path with the shortest distance to the application's QoS requirement line OU is selected as "optimal" path since it has more likeness to application's QoS requirement than any other dominant paths.
In figure 2, it is easy to understand that although A and D are dominant paths themselves, they are not feasible paths, since path A has more end-to-end delay and path D has more packet loss than the traffic QoS requirement.
In order to calculate the distance, db and dc, from B (Xb, Yb) and C (Xc, Yc) to line OU, shown in figure 2, the geometric formula [3] is used.

$$db = \frac{Yu * Xb - Xu * Yb}{\sqrt{Xu^2 + Yu^2}} \quad and, \quad dc = \frac{Yu * Xc - Xu * Yc}{\sqrt{Xu^2 + Yu^2}} \qquad [3]$$

Assume that db > dc, then path C is the optimal path for BGP to choose for routing packets of this application traffic according to the QoS requirement.
If the objective f is a desirable objective such as minimum bandwidth the inverted value of this objective, $\frac{1}{Bandwidth}$ , is represented in the graph since the QoS requirement line OU should be visualised from the point (0,0) to the application's QoS requirements U(Xu,Yu).

If there are three QoS requirements, or metrics, for an application, such as delay, jitter, and $\frac{1}{Bandwidth}$ , the formula described in [4] can be used to calculate the distance d from a point in space defined by the QoS metrics offered by any, or preferably any dominant path, P (Xp, Yp, Zp) and the application QoS requirement line extending through the origin (0, 0, 0) and the point defined by the Qos metrics for the application (Xu, Yu, Zu):

$$\sqrt{\frac{\left\|\begin{matrix} Yp - 0 & Zp - 0 \\ Yu & Zu \end{matrix}\right\|^2 + \left\|\begin{matrix} Zp - 0 & Xp - 0 \\ Zu & Xu \end{matrix}\right\|^2 + \left\|\begin{matrix} Xp - 0 & Yp - 0 \\ Xu & Yu \end{matrix}\right\|^2}{Xu^2 + Yu^2 + Zu^2}} \qquad [4]$$

$$= \sqrt{\frac{\left\|\begin{matrix} Yp & Zp \\ Yu & Zu \end{matrix}\right\|^2 + \left\|\begin{matrix} Zp & Xp \\ Zu & Xu \end{matrix}\right\|^2 + \left\|\begin{matrix} Xp & Yp \\ Xu & Yu \end{matrix}\right\|^2}{Xu^2 + Yu^2 + Zu^2}}$$

**[0032]** If a customer considers one or more quality metrics more important than other metrics the customer can specify a weight (factor) to each metric.

**[0033]** Assume that customer consider the four QoS routing metrics [ $\frac{1}{Bandwidth}(f_1)$, delay ($f_2$), jitter ($f_3$), packet loss ($f_4$)] not being equally important, then a weight value can be provided for each of the routing metrics as $w_1$, $w_2$, $w_3$, $w_4$, and

$$\sum_{i=1}^{4} w_i = 1$$

**[0034]** Therefore, the metric, or criteria, $f_i$ will be replaced by ($w_i^* f_i$) in the diagram shown in figure 2.

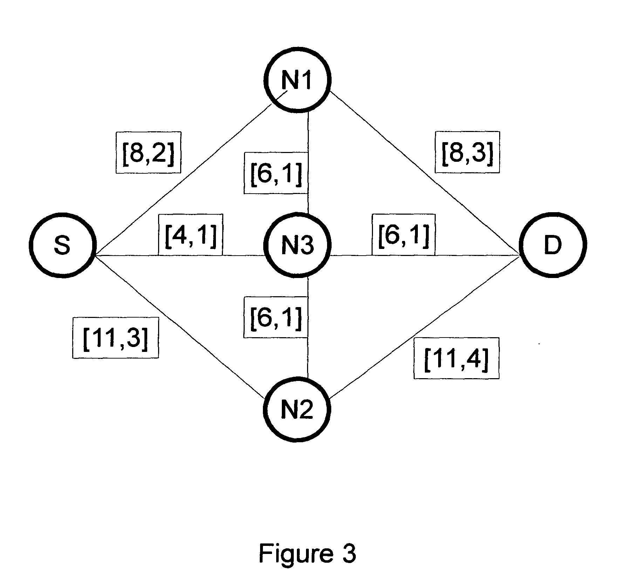

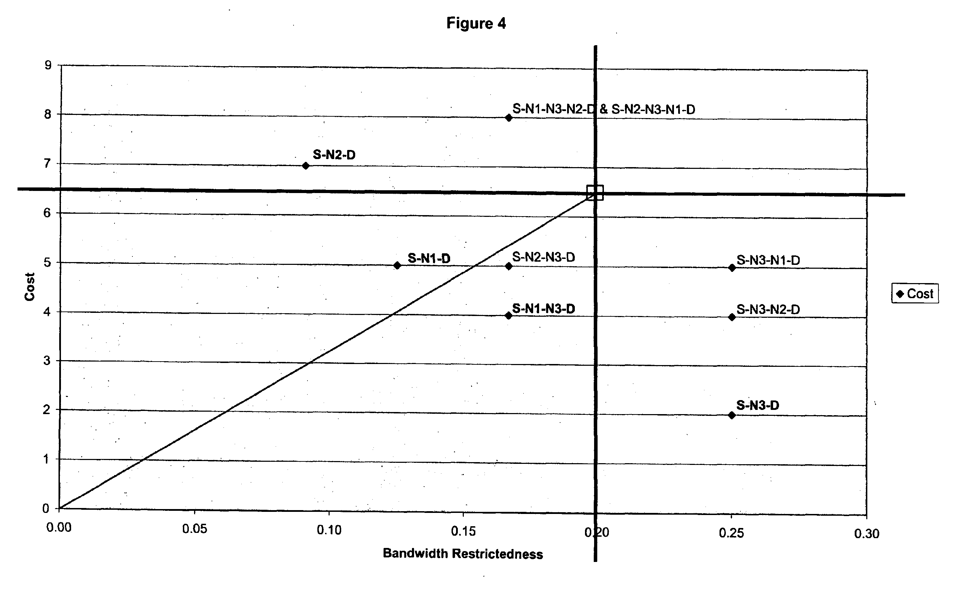

**[0035]** An embodiment of the invention will now be described in relation to figure 3 and figure 4. In this embodiment an application has to be routed from an ingress node S to an egress node D over the intermediate nodes N1, N2, and N3 in a network. There are several available links between the nodes over which the application can be routed from the ingress node to the egress node. The QoS metrics for the application are Cost and Bandwidth, where the cost should not exceed 6.5 and the bandwidth should not be less than 5Mbps. The numbers within the brackets in figure 3 represent the [bandwidth, cost] for each link.

**[0036]** Each node or router comprises one or more network interfaces, one or more processors and a memory comprising storage locations for software programs associated with the present embodiment and accessible by the processor (s).

**[0037]** The software programs comprise routing programs, traffic engineering programs, path computation programs etc. that are executed by the processor(s) to perform for example routing operations; traffic engineering and path computation.

**[0038]** The routing programs contain computer executable instructions executed by the processor(s) to perform functions provided by one or more routing protocols, such as the Border Gateway Protocol. These functions may be configured to manage a routing and/or forwarding information database (routing table) containing data, such as link costs, used to make routing and/or forwarding decisions. Topology changes and available links in the network are advertised among the nodes/routers using this protocol. For further information on how the Border gateway protocol works see RFC1771 - A Border Gateway Protocol 4 (BGP-4).

**[0039]** In accordance with the suggested enhanced Border gateway protocol routers participating in the enhanced Border Gateway Protocol should send advertisements indicating a plurality of paths to each reachable destination and also provide a multiple-dimension QoS metric for each path.

**[0040]** The path computation process in the ingress node S uses this information from the neighbouring nodes to compute available paths and their path metrics from the ingress node S to the egress node D.

**[0041]** The available paths P and their QoS metrics from ingress node S to egress node D are:

**[0042]** Since the minimum bandwidth is a desirable objective it has been inverted to a bandwidth constraint measure in accordance with this embodiment.

**[0043]** As stated earlier the process may also use Pareto Optima Multi-criteria Optimisation to determine the non-dominated paths from the ingress node to the egress node.

**[0044]** The optimisation shows that the non-dominated paths are S -N1 -D; S -N1 -N3 -D; S -N3 -D and S -N2 -D.

**[0045]** The QoS metrics for each of the available paths, or preferably only the non-dominated paths, are plotted in a graph where the axis f1 is the cost axis and the axis f2 is the Bandwidth restrictedness axis, see figure 4. The non-dominated paths are shown in bold. Also plotted in the graph is the Quality of Service metrics U (Xu, Yu) for the application; which for this application is U (0.2, 6.5).

**[0046]** A straight QoS requirement line $\underline{OU}$ is calculated from (0,0) to U (0.2, 6.5) and the distance between each of the non-dominated paths and the QoS requirement line $\underline{OU}$ is determined and the dominant path with the shortest distance to the application's QoS requirement line $\underline{OU}$ is selected as "optimal" path.

**[0047]** The distance d from the point defined by the QoS metrics offered by each non-dominated path P to the QoS requirement line $\underline{OU}$ is calculated using the geometric formula [3].

**[0048]** The distance from S-N1-D to $\underline{OU}$ is:

$$d = \frac{6.5 * 0.13 - 0.2 * 5}{\sqrt{0.2^2 + 6.5^2}} = -0,0238$$

And the distance from S-N1-N3-D to <u>OU</u> is:

$$d = \frac{6.5 * 0.17 - 0.2 * 4}{\sqrt{0.2^2 + 6.5^2}} = 0.0469$$

The path S-N1-D has the shortest distance d from the point defined by its QoS metrics to the QoS requirement line <u>OU</u> and hence this path is selected and the application is routed to the egress node along this path. Thus, a path that only just meets the QoS targets for a certain application has been selected instead for a path that substantially exceeds at least one of the QoS metrics.

If the distance d from the points defined by the QoS metrics between different paths S-N1-D and S-N1-N3-D and the QoS requirement line <u>OU</u> had been the same then either of these non-dominated paths could have be selected. However, further criteria could be used in the selection process in this case; such as there being fewer hops between the ingress node and the egress node in path S-N1-D and therefore selecting that path.

It would be apparent to one skilled in the art that the invention can be embodied in various ways and implemented in many variations. For example, the path computation process need not be implemented in each node but could be implemented in a single path computation node in the network.

In summary, there is provided a method and apparatus for operating a communications network in order to select a path P in said network from an ingress node S to an egress node D for an application generating traffic having defined Quality of Service metrics U(Xu,Yu,Zu).

Although proposals have been put forward to improve the path selection in the Border gateway Protocol, they are not as resource efficient as they could be and the aim of the novel method and apparatus is to provide a more cost effective scheme to select a "best" path from a number of available paths in the network.

From a number of available paths offering defined QoS metrics the network is operated to select the path that has the shortest distance d from a point defined by the QoS metrics for said path to a straight Quality of Service requirement line <u>OU</u> for said application, wherein said line is calculated in space defined by axes representing said Quality of Service metrics and extending through an origin (0,0,0) and the point defined by said Quality of Service metrics U(Xu,Yu,Zu) for said traffic generated by the application.

The method and apparatus can be deployed into the present Border Gateway Protocol and assign a "best" path from a number of dominant paths in a BGP extension with QoS enhancement to support multiple classes of services. It could also be used in other inter-domain and intra-domain routing protocols.

**Claims**

1. Method of operating a communications network to select a path P from an ingress node S to an egress node D in said network for traffic generated by an application having defined Quality of Service metrics U(Xu,Yu,Zu) comprising the steps of gathering a plurality of Quality of Service metrics for each of a plurality of links in the network;
   determining a plurality of paths P over said links leading from said ingress node to said egress node and calculating the Quality of service metrics P (Xp,Yp,Zp) offered by each path;
   calculating a measure indicative of the distance d from points defined by the Quality of Service metrics offered by at least a selection of the available paths P (Xp,Yp,Zp) and a straight Quality of Service requirement line <u>OU</u> extending through the origin (0,0,0) and the point defined by said Quality of Service metrics U(Xu,Yu,Zu) in a space defined by axes representing said Quality of Service metrics; and
   selecting on the basis of the indicative measure, the path P having the shortest distance d to the QoS requirement line <u>OU</u>.

2. Method according to claim 1 wherein the measure indicative of the distance d to the QoS requirement line <u>OU</u> is calculated only for Pareto Optimal paths.

**3.** A method according to any of the preceding claims wherein the application requires two Quality of Service metrics and wherein the Requirement line <u>OU</u> is represented by the formula

$$\frac{Y - Yu}{X - Xu} = \frac{Yo - Yu}{Xo - Xu}$$

where Xo = 0 and Yo = 0, and hence the <u>OU</u> line can be represented as

$$Yu * X - Xu * Y = 0.$$

**4.** A method according to claim 1 wherein said indicative measure comprises the perpendicular distance from each point to the QoS requirement line <u>OU</u>.

**5.** A method according to claim 4 wherein the distance from a path P (Xp,Yp,) to the QoS requirement line <u>OU</u> is calculated using the formula

$$d = \frac{Yu * Xb - Xu * Yb}{\sqrt{Xu^2 + Yu^2}}$$

**6.** A method according to claim 4 wherein the application requires three Quality of Service metrics and wherein the distance d between any dominant path (Xp, Yp, Zp) and the application QoS requirement line <u>OU</u> through origin (0, 0, 0) and in direction (Xu, Yu, Zu) is calculated using the formula

$$\sqrt{\frac{\left\|\begin{matrix}Yp-0 & Zp-0\\Yu & Zu\end{matrix}\right\|^2 + \left\|\begin{matrix}Zp-0 & Xp-0\\Zu & Xu\end{matrix}\right\|^2 + \left\|\begin{matrix}Xp-0 & Yp-0\\Xu & Yu\end{matrix}\right\|^2}{Xu^2 + Yu^2 + Zu^2}}$$

$$= \sqrt{\frac{\left\|\begin{matrix}Yp & Zp\\Yu & Zu\end{matrix}\right\|^2 + \left\|\begin{matrix}Zp & Xp\\Zu & Xu\end{matrix}\right\|^2 + \left\|\begin{matrix}Xp & Yp\\Xu & Yu\end{matrix}\right\|^2}{Xu^2 + Yu^2 + Zu^2}}.$$

**7.** A computer program or suite of computer programs arranged such that when executed by a computer system it/ they cause the computer program to perform all the steps of the method of any of the preceding claims.

**8.** A computer readable storage medium storing a computer program or any one or more of a suite of computer programs according to claim 6.

**9.** A router for routing an application having defined Quality of Service metrics U(Xu, Yu, Zu) through a communications network from a ingress node to an egress node, comprising
means for gathering a plurality of Quality of Service metrics for each link in the network; means for determining a plurality of paths P along said links from the ingress node to the egress node;
means for determining the Quality of Service metrics for each path P (Xp, Yp, Yz);
means for calculating a measure indicative of the distance d from the point defined by the Quality of Service metrics offered by at least a selection of the available paths P (Xp, Yp, Zp) and a straight Quality of Service requirement line <u>OU</u> extending through the origin (0,0,0) and the point defined by said Quality of Service metrics U(Xu, Yu, Zu) in a space defined by axes representing said Quality of Service metrics; and

means for selecting the path P having the shortest distance d to the Quality of Service requirement line <u>OU</u> and means for routing the application through the network along this path.

Figure 1

Figure 2

Figure 3

## Figure 4

Europäisches
Patentamt

European
Patent Office

Office européen
des brevets

## EUROPEAN SEARCH REPORT

**Application Number**

EP 09 25 0987

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DJOHARA BENYAMINA ET AL: "Wireless mesh network planning: A multi-objective optimization approach" BROADBAND COMMUNICATIONS, NETWORKS AND SYSTEMS, 2008. BROADNETS 2008. 5TH INTERNATIONAL CONFERENCE ON, IEEE, PISCATAWAY, NJ, USA, 8 September 2008 (2008-09-08), pages 602-609, XP031414804 ISBN: 978-1-4244-2391-0 * figure 3 * | 1-9 | INV. H04L12/56 |
| A | KORKMAZ T ET AL: "An efficient algorithm for finding a path subject to two additive constraints" COMPUTER COMMUNICATIONS, ELSEVIER SCIENCE PUBLISHERS BV, AMSTERDAM, NL, vol. 25, no. 3, 15 February 2002 (2002-02-15), pages 225-238, XP004313430 ISSN: 0140-3664 * paragraph [03.1] * | 1-9 | |
| A | EP 1 432 184 A (CIT ALCATEL [FR]) 23 June 2004 (2004-06-23) * paragraph [0056] - paragraph [0077] * | 1-9 | TECHNICAL FIELDS SEARCHED (IPC) H04L |
| A | MITCHELL I M ET AL: "Continuous path planning with multiple constraints" 42ND. IEEE CONFERENCE ON DECISION AND CONTROL.(CDC). MAUI, HI, DEC. 9 20031209; 20031209 - 20031212 NEW YORK, NY : IEEE, US, vol. 5, 9 December 2003 (2003-12-09), pages 5502-5507, XP010686430 ISBN: 978-0-7803-7924-4 * the whole document * | 1-9 | |

-/--

The present search report has been drawn up for all claims

| Place of search | Date of completion of the search | Examiner |
|---|---|---|
| Berlin | 8 September 2009 | Siebel, Christian |

Europäisches
Patentamt

European
Patent Office

Office européen
des brevets

# EUROPEAN SEARCH REPORT

Application Number

EP 09 25 0987

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,A | BENMOHAMED L ET AL: "Inter-Domain Routing with Multi-Dimensional QoS Requirements" MILITARY COMMUNICATIONS CONFERENCE, 2005. MILCOM 2005. IEEE ATLANTIC CITY, NJ, USA 17-20 OCT. 2005, PISCATAWAY, NJ, USA,IEEE, PISCATAWAY, NJ, USA, 17 October 2005 (2005-10-17), pages 1-7, XP010901281 ISBN: 978-0-7803-9393-6 * the whole document * ----- | 1-9 | |
| D,A | US 2008/123533 A1 (VASSEUR JEAN-PHILIPPE [US] ET AL) 29 May 2008 (2008-05-29) * the whole document * ----- | 1-9 | |
| D,A | BENMOHAMED JOHNS HOPKINS UNIVERSITY C LIANG JOHNS HOPKINS UNIVERSITY E NABER JOHNS HOPKINS UNIVERSITY A TERZIS JOHNS HOPKINS UNIVE: "QoS Enhancements to BGP in Support of Multiple Classes of Service; draft-liang-bgp-qos-00.txt" IETF STANDARD-WORKING-DRAFT, INTERNET ENGINEERING TASK FORCE, IETF, CH, 19 June 2006 (2006-06-19), XP015046059 ISSN: 0000-0004 * the whole document * ----- | 1-9 | TECHNICAL FIELDS SEARCHED (IPC) |

The present search report has been drawn up for all claims

| Place of search | Date of completion of the search | Examiner |
|---|---|---|
| Berlin | 8 September 2009 | Siebel, Christian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 09 25 0987

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2009

| Patent document cited in search report | | Publication date | Patent family member(s) | | Publication date |
|---|---|---|---|---|---|
| EP 1432184 | A | 23-06-2004 | FR<br>US | 2848757 A1<br>2004190490 A1 | 18-06-2004<br>30-09-2004 |
| US 2008123533 | A1 | 29-05-2008 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20080123533 A

**Non-patent literature cited in the description**

• Inter-Domain Routing with Multi-Dimensional QoS Requirements. *IEEE Milcom,* 2005